(19) 

Europäisches
Patentamt

European
Patent Office

Office européen
des brevets

(11) EP 2 683 960 B1

(12) **EUROPEAN PATENT SPECIFICATION**

(45) Date of publication and mention
of the grant of the patent:
**12.08.2015  Bulletin 2015/33**

(21) Application number: **11709869.9**

(22) Date of filing: **07.03.2011**

(51) Int Cl.:
***F16D 25/12*** *(2006.01)*

(86) International application number:
**PCT/EP2011/001106**

(87) International publication number:
**WO 2012/119612 (13.09.2012 Gazette 2012/37)**

(54) **SELF-ADJUSTING CLUTCH ACTUATOR FOR OPERATING A VEHICLE CLUTCH**

SELBSTNACHSTELLENDER KUPPLUNGSBETÄTIGER FÜR DEN BETRIEB EINER
FAHRZEUGKUPPLUNG

ACTIONNEUR D'EMBRAYAGE À AUTO-AJUSTEMENT POUR LE FONCTIONNEMENT D'UN
EMBRAYAGE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2014  Bulletin 2014/03**

(73) Proprietor: **Kongsberg Automotive As
3601 Kongsberg (NO)**

(72) Inventor: **SOLBERG, Hakon Holm
N-3047 Drammen (NO)**

(74) Representative: **UEXKÜLL & STOLBERG
Patentanwälte
Beselerstrasse 4
22607 Hamburg (DE)**

(56) References cited:
**EP-A2- 0 217 589     DE-A1- 3 245 028
GB-A- 1 466 651     US-A- 5 423 401**

## Description

The present invention relates to a self-adjusting clutch actuator for operating a vehicle clutch of the type that is permanently biased to a fully engaged position, the clutch actuator comprising a servo drive device, a piston slidably mounted for linear movement in an axial direction driven by the servo drive device, the piston being arranged to act on the vehicle clutch via a transfer member, the clutch actuator being arranged such that upon activation of the servo drive device the piston moves the transfer member in the axial direction to move the vehicle clutch to its disengaged position, whereas upon deactivation of the servo drive the biased movement of the vehicle clutch back to its engaged position drives movement of the transfer member and the piston in the axial direction direction back to an end stop position thereof, wherein a compensating mechanism is disposed between piston and transfer member, the compensating mechanism being capable of changing between an unlocked state in which it is able to adjust its length to follow the axial position of the transfer member in the engaged state of the vehicle clutch, and a locked state in which it is locked to a fixed length.

Clutch actuating systems are employed in motor vehicles for operating the clutch. Normally, the clutch is arranged such that it is biased to the fully engaged state, i.e. the clutch always returns into the fully engaged state once an external operating force is released. The clutch actuator comprises a servo drive device, e.g. a pneumatic cylinder in which a piston is slidably received. The pneumatic cylinder is selectively connectable to a pressure fluid source. Upon pressurization the piston is moved from an end stop position to an actuating position. This movement is transmitted to the vehicle clutch via a transfer member, e.g. a push rod, which is moved in its axial direction to move the clutch from its fully engaged state to its disengaged state. Due to wear of the clutch or other variations in the conditions in which the clutch is operated the axial positions of the transfer member corresponding to the fully engaged and disengaged positions may vary over time. Since the positioning and movement range of the servo drive and piston does not vary accordingly a compensating mechanism is needed to avoid any play between piston and transfer member, or in other words to adjust the piston stroke of the servo drive (e.g. pneumatic cylinder) to the clutch stroke for moving it from the fully engaged to the disengaged position. For this purpose a compensating mechanism is disposed between the piston and the transfer member, which compensating mechanism is capable of changing between an unlocked state in which it is able to adjust its length and a locked state in which it is locked to a fixed length and is capable of transmitting the force from the piston to the push rod without length change.

U.S. patent 5,390,497 describes an example of such servo assisted clutch actuator, wherein the servo drive device comprises a pneumatic cylinder in which a piston is received for sliding movement driven by selective pressurization of the pneumatic cylinder. The clutch actuator actuates a push rod operated vehicular master clutch which is constantly biased to a fully engaged position and adapted to be driven to a disengaged position by axial movement of the push rod. The actuator comprises a primary actuator piston slidably received in a primary pneumatic cylinder and defining a chamber connected to a selectively pneumatically pressurized and exhausted conduit. The actuator further comprises a hydraulic mounting assembly carried by said primary piston for adjustably mounting said push rod to said primary actuator piston for axial movement therewith. This hydraulic mounting assembly includes a second cylinder defined by said primary actuating piston, a secondary piston slidably received in that secondary cylinder and defining an adjustment chamber filled with hydraulic fluid, wherein said push rod is axially fixed to said secondary piston. The adjustment chamber is in communication with a hydraulic reservoir by a fluid passage controlled by a normally closed valve which opens upon said primary actuating piston moving to a preselected axial position. In this arrangement the secondary piston provides for an actively driven movement for achieving the length compensation between the primary piston and the push rod. This arrangement with a further active drive for performing a relative movement between piston and push rod is very complicated and not very reliable since any disruption or failure in the secondary hydraulic system could lead to insufficient length compensation or complete failure of the compensation.

In U.S. patent 5,984,072 a self-adjusting compensating mechanism for a clutch actuator is described. The compensating mechanism comprises three coaxially arranged components. The first component is axially moveable with respect to an intermediate component. Movement of the first component with respect to the second component, from a first to a second axial position brings locking bodies from a released state to a locked state in frictional contact with the third component. The first component comprises a conical end portion such that axial forward movement of the conical end portion urges the locking bodies radially outward into frictional locking contact with the surrounding third component, thus bringing the compensating mechanism to a locked state. When the first component is retracted again, the intermediate component is moved against a stop such that the first component is withdrawn relative to the intermediate and third component which releases the locking bodies due to the backward movement of the conical end portion of the first component, thus bringing the compensating mechanism to an unlocked state. In the unlocked state a spring is acting between the first and third components to drive a compensating movement if required. In the unlocked state the spring between the first and third components of the compensating mechanism and the bias force of the clutch urging it in to its engaged state come to an equilibrium state.

Another mechanical length compensating mechanism for a clutch actuator is described in EP 1 531 278 A1. In this mechanism two complementary wedge-shaped members are arranged in a bore of a third component of the compensating mechanism. By relative movement of the two wedge-shaped members these wedge-shaped members may be brought into a locked state in which the outwardly directed force caused by the wedge-shaped members movement relative to each other leads to a frictional engagement with the inner walls of the bore of the third component. The arrangement may be brought to an unlocked state by moving the wedge-shaped members in the opposite direction, wherein one of the wedge-shaped members is moved against a stop to hold it, whereafter further movement of the other wedge-shaped member leads to disengagement of the wedge-shaped members from the inner walls of the bore of the third component, whereafter a spring acting between the wedge-shaped members and the third component may cause an adjusting movement of the compensating mechanism.

U.S. patent 5,423,401 describes another self-adjusting compensating mechanism according to the preamble of claim 1.

A problem associated with these mechanical compensating mechanisms is that very high forces need to be generated in order to achieve a locked state between the components which is able to withstand force transmission through the compensating mechanism to the transfer member for actuations of the vehicle clutch. In other words, the frictional engagement in the locked state has to be achieved by high forces in normal direction to the engaging surfaces, wherein this frictional engagement forces must be higher than the highest force possibly occurring during force transmission to actuate the clutch. In order to achieve such locked state in frictional engagement with high reliability the design and tolerances of the cooperating components have to be controlled such that a very higher precision in dimensions and material properties of the cooperating components is guarantied.

It is an object of the present invention to provide a self-adjusting clutch actuator having a compensating mechanism capable of changing between a locked and an unlocked state with high reliability and with less requirements on the cooperating components that effect the change from the locked to the unlocked state and vice versa, in particular that lower force levels need to be achieved to provide the locking engagement to support higher force transmission by the actuator.

This object is achieved by the self-adjusting clutch actuator for operating a vehicle clutch as defined in claim 1. Preferred embodiments of the invention are set out in the dependent claims.

According to the present invention the compensating mechanism of the clutch actuator comprises a positive locking transmission which converts any length adjusting movement of the compensating mechanism into a relative movement of a first and a second component of the compensating mechanism and vice versa. The compensating mechanism is arranged such that its transition to the locked state is caused by moving said first and second components into frictional engagement with each other to thereby prevent any length adjusting movement of the compensating mechanism by preventing said relative movement of the first and second components. The positive locking transmission has a gear ratio of larger than 1. In other words, in the unlocked state a length adjusting movement of the compensating mechanism over a first distance in the axial direction of the transfer member causes a relative movement of said first and second component over a second distance relative to each other which is larger than the first distance.

In the locked state of the compensating mechanism any movement of the first and second components of the compensating mechanism which would result in a length changing movement of the compensating mechanism has to be prevented in order to ensure that the actuating force can be transmitted through the compensating mechanism to the transfer member (e.g. push rod). In order to ensure this force transmission capability the frictional engagement of the first and second components must withstand the forces acting between the first and second components as a result of the actuating force being transmitted through the positive locking transmission. By arranging this transmission to have a gear ratio of larger than 1 the requirements on the frictional contact between the first and second components to ensure the force transmission capability of the length compensating mechanism are less critical. In other words the capability of the compensating mechanism to remain in the locked state when actuating forces have to be transmitted from the piston through the length compensating mechanism to the transfer member can be ensured by the frictional contact of the first and second components with a high safety margin such that manufacturing tolerances that influence the frictional engagement between the first and second components are less critical. Also, the clutch actuator can withstand varying and adverse operating conditions, e.g. if air with entrained oil would enter the system a locking engagement may still be achieved despite of reduced friction.

Since the locked state is effected by locking engagement between the first and second component and since the positive locking transmission is linking length changes to movements of the first and second components via the positive locking transmission, a gear ratio of greater than 1 corresponds to an increased leverage of the locking engagement holding it in the locked state, or in other words enabling a higher force to be transmitted via the compensating mechanism without risk that the transmitted force (causing a corresponding counterforce through the transmission to the first and second components) could cause the compensating mechanism to allow length change movements.

In general, various kinds of positive locking transmissions can be utilized, for example transmissions which convert the axial movement along the longitudinal axis of the transfer member into a further axial movement of higher velocity, or in a linear movement perpendicular to the axial movement of the length compensating mechanism. However, a rather space efficient solution is the conversion of the length compensating axial movement of the length compensating mechanism into a rotational movement, with the rotational axis aligned with the longitudinal axis of the length compensating mechanism. The longitudinal axis of the length compensating mechanism is the axis along which a length compensating movement of the mechanism takes place. Such a conversion of a linear axial movement into a rotational movement may be achieved with a lead screw and nut arrangement, wherein the lead screw is driven by the axial length compensating movement which causes a rotational movement of the nut component. A very effective embodiment of such lead screw and nut arrangement will be described in the following, wherein the nut drives a rotational movement of a disc-shaped frustoconical locking body in a hollow space having complementary frustoconical inner sidewalls. The arrangement of the disc-shaped frustoconical locking body in the frustoconical hollow space corresponds to a friction clutch arrangement, wherein the clutch is moved to the engaged state by moving the disc-shaped frustoconical locking body in axial direction such that it frictionally engages with the inner sidewalls of the hollow space which corresponds to the transition from the unlocked to the locked state of the compensating mechanism. In this case the disc-shaped frustoconical locking body and the member in which the hollow space is formed are the first and second relatively moveable components of the compensating mechanism.

In such arrangement with a disc-shaped frustoconical locking body and a complementary hollow space the gear ratio of the positive locking transmission can be varied in a wide range by appropriately selecting the pitch of the threads of the lead screw and nut arrangement and the outer diameter of the locking body. This will be explained in the following for a disc-shaped frustoconical locking body and a lead screw and nut arrangement as shown in the Figures of the preferred embodiments, wherein frictional forces will be neglected to demonstrate the operating principle. In such arrangement the movement path length of a point on the outer sidewall surface of the disc-shaped locking body is related to a length compensating movement of the compensating mechanism in its axial direction by the following relation:

$$\frac{l}{x} = \pi \cdot \frac{\Phi_D}{\Delta}$$

wherein *l* is the movement of a point on the outer surface of the disc, x is the axial displacement (length compensation) of the compensating mechanism, $\Phi_D$ is the outer diameter of the disc-shaped locking body, and $\Delta$ is the pitch (millimeter per revolution) of the lead screw and nut arrangement.

The gear ratio *gr* which describes the relative movements of the surfaces of the first and second component of the compensating mechanism to the length compensating movement in axial direction of the compensating mechanism is given by:

$$gr = \frac{l}{x} = \pi \cdot \frac{\Phi_D}{\Delta}$$

On the other hand one can calculate the torque that is acting on the disc-shaped locking body when an actuation force $F_A$ is acting through the piston and the compensating mechanism onto the transfer member (e.g. push rod):

$$T_D = \frac{\Phi_D}{2} \cdot F_{DN} \cdot \mu_D = \frac{\Phi_D}{2} \cdot \frac{F_A}{\cos(\alpha_D)} \cdot \mu_D$$

wherein $\mu_D$ is the friction coefficient of the locking body on the inner walls of the hollow space, and $\alpha_D$ is the angle of inclination of the sidewalls of the frustoconical locking disc with respect to line perpendicular to the rotational axis of the locking body, and $F_{DN}$ is the force acting in normal direction on the inclined sidewalls of the disc-shaped locking body.

Further, one can calculate the torque introduced to the screw from the nut:

$$T_S = \frac{\Phi_D}{2} \cdot F_A \cdot \tan(\alpha_D) = \frac{\Phi_D}{2} \cdot F_A \cdot \frac{\Delta}{\pi \cdot \Phi_D}$$

To keep the locked state it has to be ensured that $T_D \geq T_S$. By inserting the above relations this corresponds to

$$\frac{\Phi_D \cdot \mu_D}{\cos(\alpha_D)} \geq \frac{\Delta}{\pi}$$

or when using the above relation for the gear ratio

$$gr \geq \frac{\cos(\alpha_D)}{\mu_D}$$

For $\mu_D$ and $\cos(\alpha_D)$ one may consider a worst case scenario. This would be a very low friction coefficient (in case lubricating material has reached the interface of locking body and its counter-surface) of 0.05 and an angle $\alpha_D$ as large as possible which is $\alpha_D$=75° because

beyond that angle the locking body would chuck. These values correspond to $\cos(\alpha_D)/\mu_D = 5$. In order to guarantee the locking capability of the length compensating mechanism in this extreme case a gear ratio of 5 is already sufficient. As can be seen from the above formula for the gear ratio *gr* such value can easily be realized by properly selecting the outer diameter of the disc-shaped locking body compared to the pitch of the lead screw since the outer diameter can be made large compared to the pitch high values of the gear ratio can easily be achieved. Even though for an extreme situation a gear ratio of 5 should be considered it is found that for normal and usual conditions a gear ratio of larger than 1 is already sufficient.

According to the invention, the servo drive device comprises a pneumatic or hydraulic cylinder, wherein the piston is slidably received therein to define a chamber which is selectively connectable to a pressure fluid source for activation of the servo drive device and which is selectively depressurizably for deactivation of the servo drive device.

According to the invention, the length compensating mechanism is arranged to be responsive to the movement state of the piston such that the change from the locked to the unlocked state occurs upon the piston reaching the end stop position as a result of a depressurization of the chamber, and that it causes a change from the unlocked to the locked state upon leaving its end stop position as a result of the next pressurization of the chamber. In this embodiment the length compensating mechanism will come to the unlocked state after each actuation of the clutch actuator so that a length compensation is possible after each actuation. Such compensation will occur after an actuation of the clutch actuator whenever the end position of the transfer member (e.g. push rod) relative to the piston changed. The compensating mechanism will then adapt to the new end position of the transfer member by adjusting its length to it. This adjustment is possible in both directions, i.e. to longer or shorter length of the compensating mechanism. The compensation is driven by a spring force urging the length compensating mechanism to longer length and the oppositely directed bias force which urges the vehicle clutch to its fully engaged position which bias force is transmitted via the transfer member to the length compensating mechanism. The compensated length state is reached when both spring forces reached an equilibrium.

In a preferred embodiment the positive locking transmission includes a lead screw and nut arrangement including a lead screw oriented in the axial direction of the transfer member such that a length compensating movement in the axial direction of the lead screw is converted into a rotational movement of the nut component. In a preferred embodiment the nut is connected to a locking body such that an axial movement of the lead screw is converted into a rotational movement of the locking body. In such arrangement the gear ratio is defined by the ratio of the relative axial lead screw movement to the movement of the locking body surface relative to the associated surface of the second component of the compensating mechanism against which the locking body is in frictional engagement in the locked state. In arrangements in which the velocity (or relative movement) between the first and second component depends on the location, for example in case of a disc-shaped locking body abutting with its circular end face against an opposite planar surface with frictional contact in the locked state, the gear ratio can be defined as the average distance that points on the surface of the disc-shaped locking body travel compared to the length compensating movement of the lead screw relative to the nut in the axial direction.

In a preferred embodiment the piston forms part of the compensating mechanism and comprises a cylindrical piston body in which a hollow space is provided in the center which has diverging sidewalls to form a frustoconical space. An extension of one of the components of the nut and lead screw arrangement extends into the hollow space and carries a disc-shaped locking body of complementary shape to the frustoconical hollow space in the piston body, i.e. the locking body is likewise of frustoconical shape. The locking body is mounted such that it is moveable in the axial direction of the length compensating mechanism such that it may be spaced apart from the inner sidewalls of the hollow space and may thus rotate around the rotational axis of the nut and lead screw arrangement, and may be brought into frictionally engaging contact with the inner sidewalls of the frustoconical space of the piston body to thereby prevent further rotation of the locking body and to effect the locked state of the compensating mechanism. Preferably, the orientation of the frustoconical components is such that the hypothetical apex of the conical structure of the locking body is pointing away from the length compensation mechanism and the transfer member, or in other words the frustoconical locking body and the complementary frustoconical space are oriented such that the smaller diameter end portion of the frustoconical locking body is directed away from the lead srew and nut arrangement and the transfer member. A change from the locked to the unlocked state of the compensating mechanism is then effected by a shift of the locking body in the axial direction of the compensating mechanism towards the transfer member which causes a shift of the locking body from the position in frictional contact with a sidewall in the hollow space in the cylinder body to a second position without frictional contact to allow rotation of the locking body within the hollow space. In this arrangement the frustoconical locking body is automatically urged back to the locked state in frictional contact in the frustoconical hollow space by the counter-force exerted on the length compensating mechanism upon the next actuation of the clutch actuator when the piston is driving the transfer member through the compensating mechanism to disengage the vehicle clutch.

In a preferred embodiment the frustoconical locking body is provided with a pin at its smaller diameter end face, i.e. directed to the end wall of the pneumatic cylinder. The pin extends through a through hole in the piston end wall facing the chamber of the pneumatic cylinder. The pin is arranged to cooperate with an opposing end wall portion of the pneumatic cylinder such that upon coming into abutment against said end wall portion when the piston approaches its end stop position, the pin urges the locking body in the hollow space within the piston to be lifted off from its first engaged to its second disengaged position to thereby bring the compensating mechanism to its unlocked state.

In a preferred embodiment the piston is provided with a central tubular extension in which the lead screw and nut arrangement is disposed. The nut component of the lead screw and nut arrangement is extending with one of its ends into the hollow space in the piston and the lead screw is extending from engagement portion with the nut to an end portion which is attached to a mounting body received in the interior of the tubular extension, wherein the mounting body is mounted in the tubular extension such that it is locked against rotational movement but allows shifting movements along the axial direction of the tubular extension. The mounting body is in turn linked to the piston rod to be able to exert a force on the piston rod. In this manner a force is transmitted from the piston to the transfer member.

The invention will be further described with reference to preferred embodiments and the accompanying drawings in which:

Fig. 1 shows a schematic cross sectional view of a clutch actuator according to the present invention;

Figs. 2 to 6 show corresponding cross sectional views of the clutch actuator in a sequence of operational states during an actuation operation;

Fig. 7 shows an alternative embodiment of a clutch actuator in a cross sectional view as in the previous Figures; and

Figs. 8 to 11 show an enlarged detail of a threshold spring mechanism of the embodiment of Figure 7 in subsequent operational states;

Fig. 12 shows an embodiment of a clutch actuator having an alternative servo drive device; and

Fig. 13 shows a schematic view of a clutch actuator having an alternative positive locking transmission.

The present invention will now be described with reference to embodiments in which the servo drive device is provided by a pneumatic drive including a pneumatic cylinder with the piston received therein to be moved by pneumatic activation and deactivation. It should be understood that in general also other drive mechanisms can be utilized which are capable of effecting linear movement of the piston, e.g. an electric motor driving the piston via a gear and gear rack arrangement or a lead screw and nut mechanism. Also, it should be understood that the term piston as used herein is not limited to a piston of a piston and cylinder arrangement but is intended to cover any element that is mounted to be linearly moveable (this movement is sometimes also referred to herein as movement in the axial direction of the piston or axial movement). In the following embodiments the transfer member which transmits force to and from the vehicle clutch is provided in the form of a push/pull rod which will be referred to herein as a push rod in an abbreviated manner.

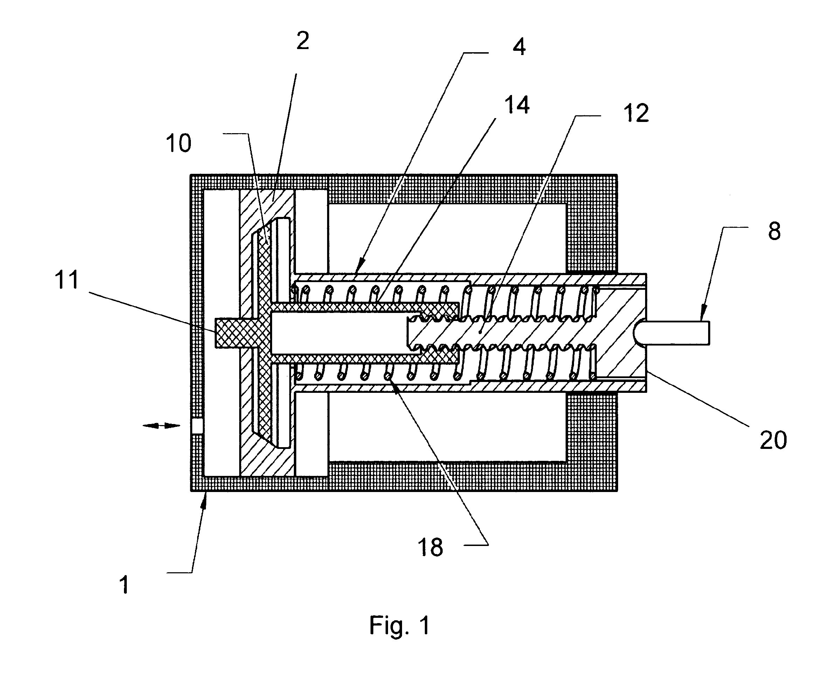

The clutch actuator schematically shown in section in Fig. 1 comprises a pneumatic cylinder 1, a piston 2 slidably received therein to define a chamber which is selectively connectable to a pressure fluid source (not shown) through an opening in the cylinder end wall. The pressurization and depressurization of the chamber by supplying or exhausting pressurized fluid is schematically indicated by the double arrow. The piston 2 is moved in the direction to the right hand side upon pressurization of the chamber of the pneumatic cylinder 1, and is moved to the left hand side upon depressurization of the chamber. The piston 2 has an axial tubular extension 4. A lead screw 12 is disposed coaxially in the tubular extension 4. The lead screw 12 is attached to a mounting member 20 which is received in the end portion of the tubular extension 14. The mounting member 20 is held in the end portion of the tubular extension 14 such that any rotational movement of the mounting member is prevented, whereas an axial movement in the axial direction of tubular extension 4 and lead screw 12 is possible. The mounting member 20 acts on a push rod 8 which extends to the vehicle clutch.

The vehicle clutch is normally biased to its engaged position. The bias force acting on the clutch urging it to its normally engaged position is acting, via push rod 8 and the mounting member 20, on the piston 2 such that depressurization of the chamber of the pneumatic cylinder 1 causes that the bias force of the clutch moves the push rod 8 and piston 2 to the left hand side in Fig. 1 so that piston 2 reaches its end stop position in which the bias force from the vehicle clutch and a first force form a spring mechanism 18 acting between then mounting member 20 and the piston 2 are in equilibrium.

The length compensating mechanism acting between the piston 2 and the push rod 8 comprises besides the lead screw 12 a sleeve 14 coaxially extending from the piston 2. This sleeve 14 comprises an internal thread which cooperates with the threads of the lead screw 12. The sleeve 14 carries, on its end opposite to the end receiving the lead screw 12, a locking body 10 which is generally disc-shaped; the locking body 10 may be formed integrally with the sleeve 14. The sidewalls of the locking body 10 are inclined such that the locking body has a frustoconical shape. The locking body 10 is received in a central hollow space formed in the piston 2. The inner sidewalls of the hollow space within the piston 2 are likewise inclined at a similar angle, preferably the same angle, as the side surface of the locking body 2. By a movement in the axial direction of the sleeve 14 the locking body is correspondingly moved within the central hollow space in the piston 2. By such axial movement of the locking body 10, it may be brought from an engaged state in which the sidewalls of the locking body 10 are in frictional engagement with the inner walls of the hollow space in the piston 2, to an unlocked state in which the locking body 10 is lifted off the tapering inner walls of the hollow space within the piston 2. In this unlocked state the fictional engagement of the locking body is released and the locking body is free to rotate around the longitudinal axis of the sleeve 14.

In this embodiment the disc-shaped locking body 10 and the piston 2 form the first and second components of the compensating mechanism which in the unlocked state are movable relative to each other and which in the locked state are in frictional engagement with each other.

In the operational state shown in Fig. 1 the locking body 10 is in frictional engagement with the piston 2 such that the length compensating mechanism is in its locked state. The length compensating mechanism is locked to a fixed length and is able to transmit a force upon pressurization of the chamber of the pneumatic cylinder 1 to the push rod 8, and by the push rod further to the vehicle clutch (not shown).

After actuation of the clutch actuator by pressurization of the chamber of the pneumatic cylinder 1 and thereby pushing the push rod and the vehicle clutch to its disengaged state, the actuator is released again by depressurization of the chamber within the cylinder 1. In this state the bias force of the vehicle clutch pushing it back to its normally engaged position is pushing the push rod 8 and thereby the tubular extension 4 of the piston 2 back so that the piston 2 is moved back to its end stop position. When approaching its stop end position the piston 2 will come, via a pin 11, in abutment against an end wall portion of the pneumatic cylinder 2. This abutment forces the locking body 10 to make an axial shift in the piston hollow space such that it is moved from its engaged position in fictional contact with the inner sidewalls of the hollow space within the piston to a released state with sufficiently decreased frictional contact, i.e. to such a degree that the locking body 10 is able to rotate when driven by the bias force of the clutch returning to its engaged position. By this mechanism the length compensating mechanism is brought from its locked state (locked to a fixed length) to its unlocked state in which it is able to perform a length compensating movement. The length compensating movement will continue until the bias force of the clutch urging it to its engaged position and the force exerted by the spring 18 come to an equilibrium (in principle also frictional forces will contribute to the equilibrium state).

With the next operation of the clutch actuator the chamber of the pneumatic cylinder is again pressurized, and the length compensating mechanism is brought from the unlocked state to the locked state when the piston leaves its rest position, whereupon the pin 11 of the locking body 10 lifts off the end wall portion of the pneumatic cylinder 1. Then the counter force from the clutch acting via push rod 8, mounting member 20 through the lead screw 12 and sleeve 14 brings the locking body 10 into frictional engagement with the inner sidewalls of the hollow space within the piston 2 such that further rotation of the locking body 10 is prevented. Once rotation of the locking body 10 is prevented the length compensating mechanism is again in its locked state since the positive locking transmission of the lead screw 12 and sleeve 4 is locked, thereby preventing any length adjustment.

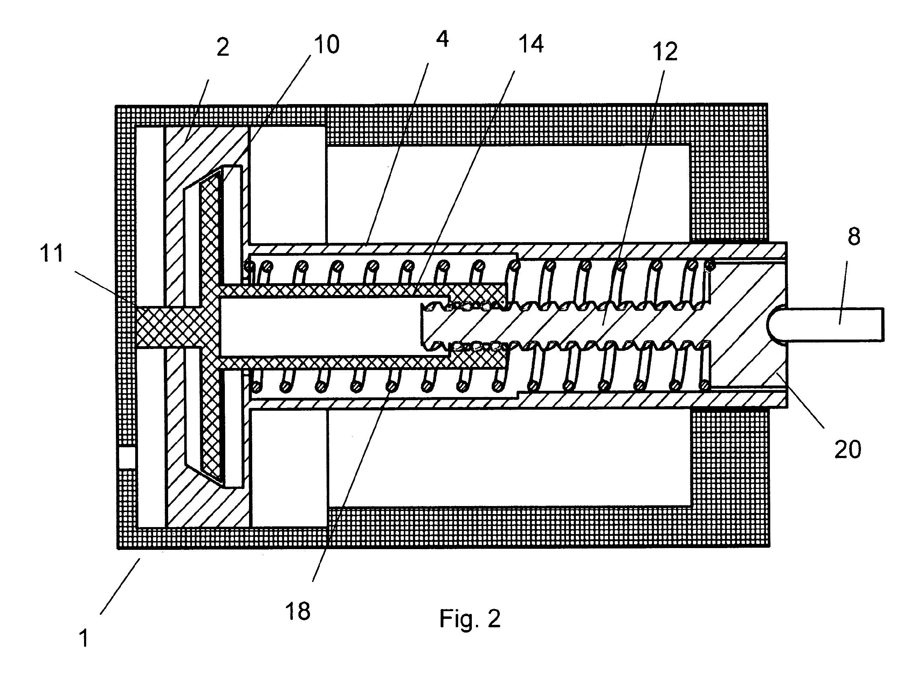

A sequence of operational and movement states of the clutch actuator and its compensating mechanism will now be described with reference to the sequence of states shown in Figs. 2 to 6.

Figure 2 shows the clutch actuator in its stop end position, i.e. the chamber of the pneumatic cylinder 1 is depressurized. The pin 11 is in abutment on an end wall portion of the pneumatic cylinder 1. Due to this contact the disc-shaped locking body 10 is held in a fixed position within the pneumatic cylinder 1, whereas a certain further movement of the piston to its stop end position causes a relative movement of the disc-shaped locking body 10 within the hollow space of the piston 2 such that the locking body 10 is lifted off the frustoconical inner sidewall of the hollow space, the locking body 10 thus being able to rotate when driven by the clutch bias force to the engaged position. Please note that the diameter of the pin 11 could indeed be smaller than shown in the Figures so that the friction between the end face of the pin and the opposing end wall portion of the pneumatic cylinder is low. In this state a length compensating movement takes place until the spring 18 and the spring force biasing the vehicle clutch to its engaged position have come to an equilibrium. The state shown in Figure 2 is a rest state of the clutch actuator before the next actuation takes place.

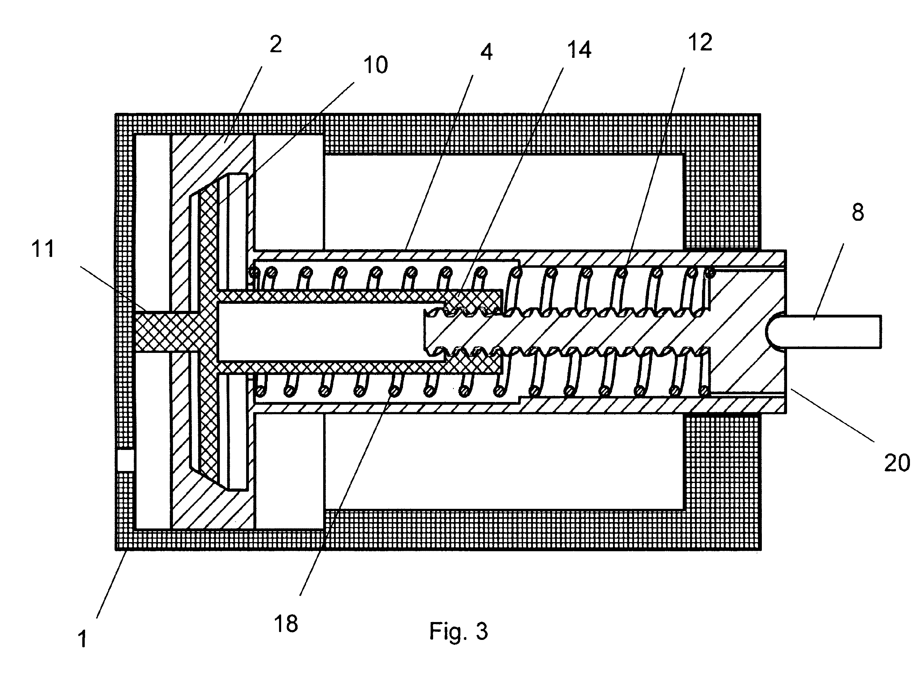

Figure 3 shows the state just after begin of a new pressurization of the chamber of the pneumatic cylinder 1, in which state the piston 2 has moved away from the end wall of the pneumatic cylinder 1. This movement of the piston 2 results in an opposite movement of the disc-shaped locking body 10 relative to the piston 2 back into frictional engagement with the frustoconical inner sidewalls of the hollow space within the piston 2 (this relative movement of the locking body 10 in counter-direction to the piston 2 is caused by the oppositely directed bias force of the vehicle clutch that is acting through the push rod 8, axially moveable mounting member 20, lead screw 12, and sleeve 18 on the locking body 10 and thus urges the locking body 10 into abutting contact with the frustoconical inner sidewall portions of the hollow space).

In this manner the length compensating mechanism is brought back to its locked state upon pressurization of the pneumatic cylinder of the clutch actuator. Since the rotation of the locking body 10 is prevented in this state any rotational movement of the sleeve 14 with respect to the lead screw 12 is prevented, thereby locking the compensating mechanism to a fixed length. In this state force acting on the piston 2 can be transmitted through the length compensating mechanism to the push rod 8.

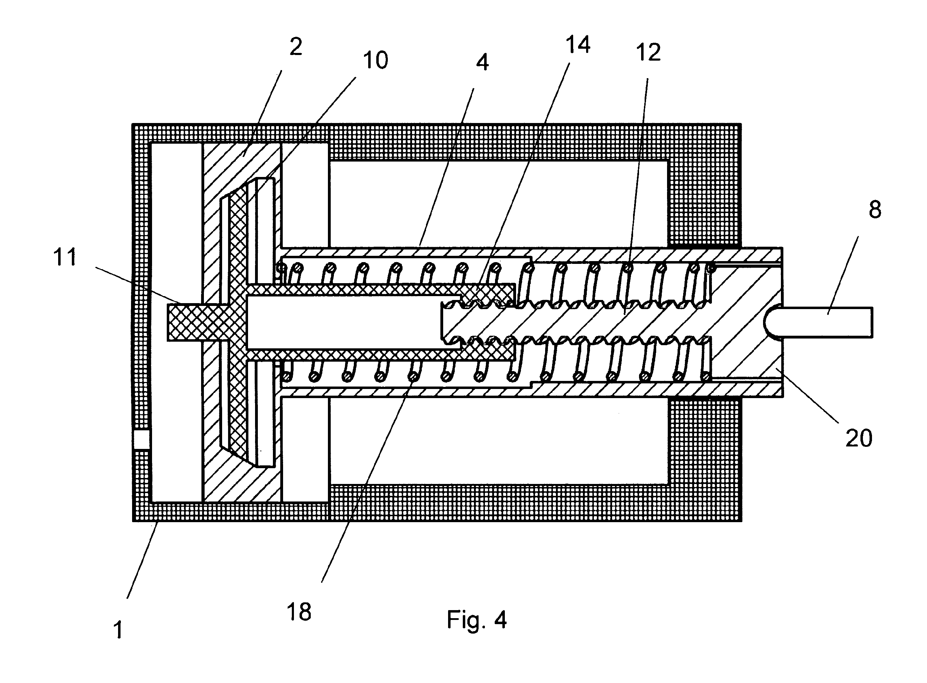

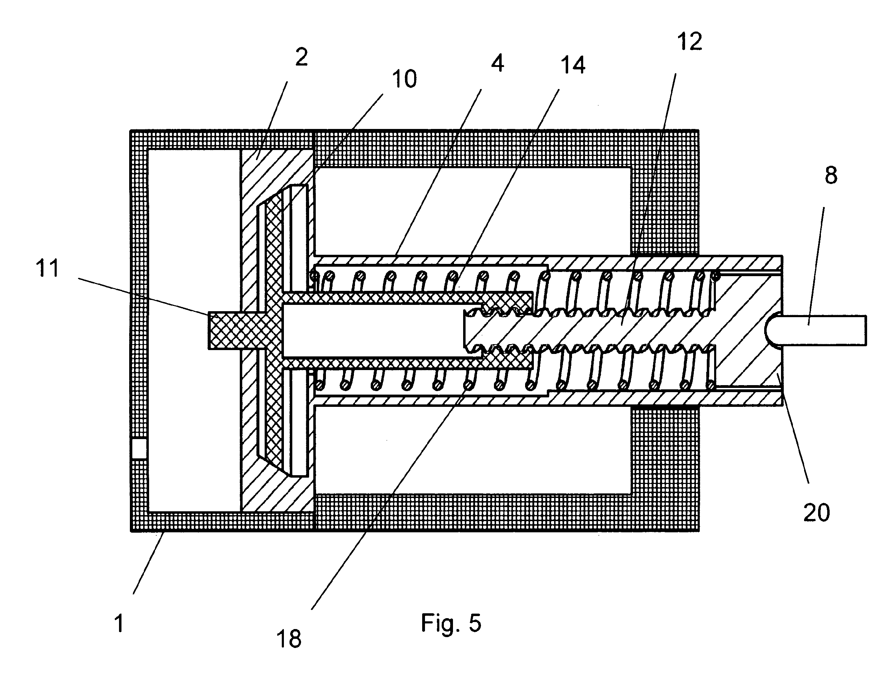

In Figure 4 the piston 2 has been moved further, and in Figure 5 the piston 2 has reached the full stroke which corresponds to the fully disengaged state of the vehicle clutch.

When the gear shift operation is completed the driver releases the clutch actuator, and the chamber of the pneumatic cylinder 1 is depressurized. Piston 2 and the components of the compensating mechanism and the push rod 8 then follow the reverse sequence, making a transition from Fig. 5 to 2. When the piston eventually approaches the position of Figure 2 the locking body 10 is axially shifted within the hollow space of the piston 2, thereby disengaging the frustoconical outer sidewalls of the locking body 10 from the frustoconical inner sidewalls of the hollow space within the piston 2. This corresponds to a transition of the length compensating mechanism from its locked state to the unlocked state in which the locking body 10 is free to rotate. In this state the length compensation can take place if the distance between piston 2 and push rod 8 has to be adapted to a changed situation which may be due to wear of the vehicle clutch or other changed environmental conditions (temperature changes etc.), or during assembly.

The length compensation will then take place by rotation of the sleeve 14 with respect to the lead screw 12 until the spring forces from the spring 18 and the spring biasing the clutch back to its fully engaged position reach an equilibrium. It should be noted that the length compensating mechanism can perform length compensating movements in both directions, i.e. increase the distance of the push rod 8 from the piston 2 or decrease it.

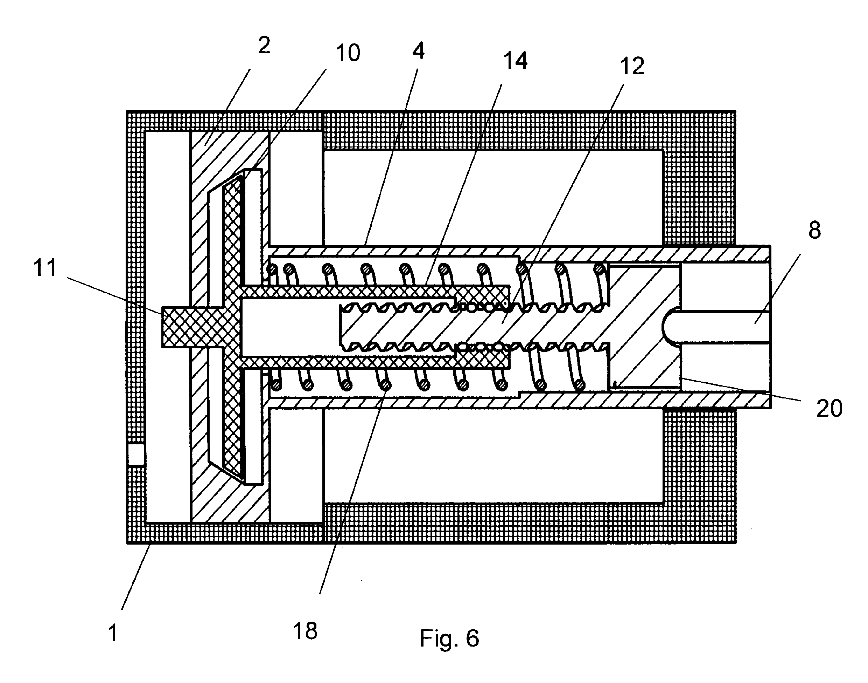

Figure 6 shows a situation after a length compensation to a shorter length took place in which the mounting member 20 has moved relatively closer to the piston 2, and the lead screw 12 has been screwed further into the sleeve 14. It should be noted that in the state shown in Figure 6 the locking body 10 should actually be in frictional contact with the inner sidewalls of the hollow space within the piston 2 since the piston is moved away from its stop end position by pressurization of the chamber.

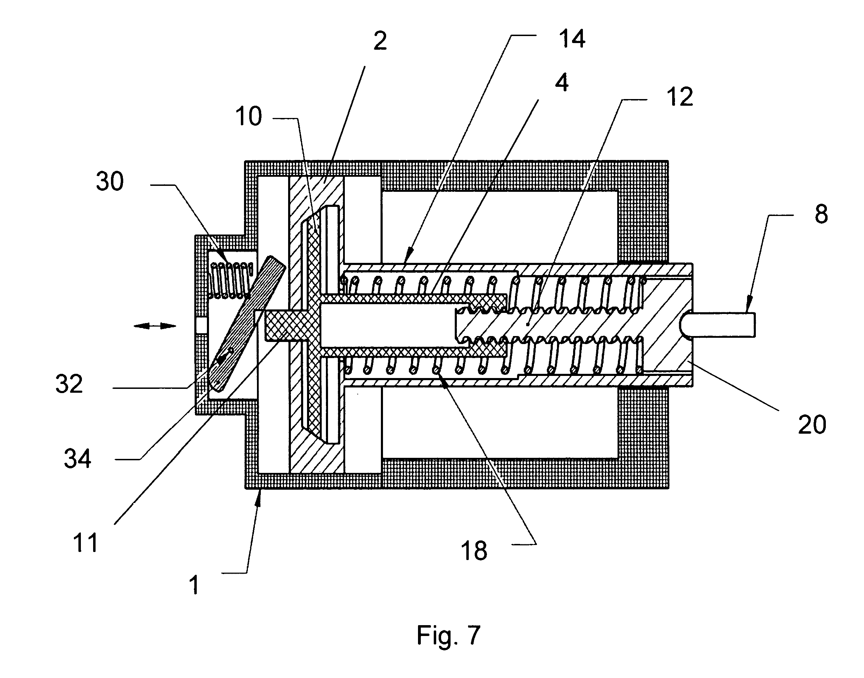

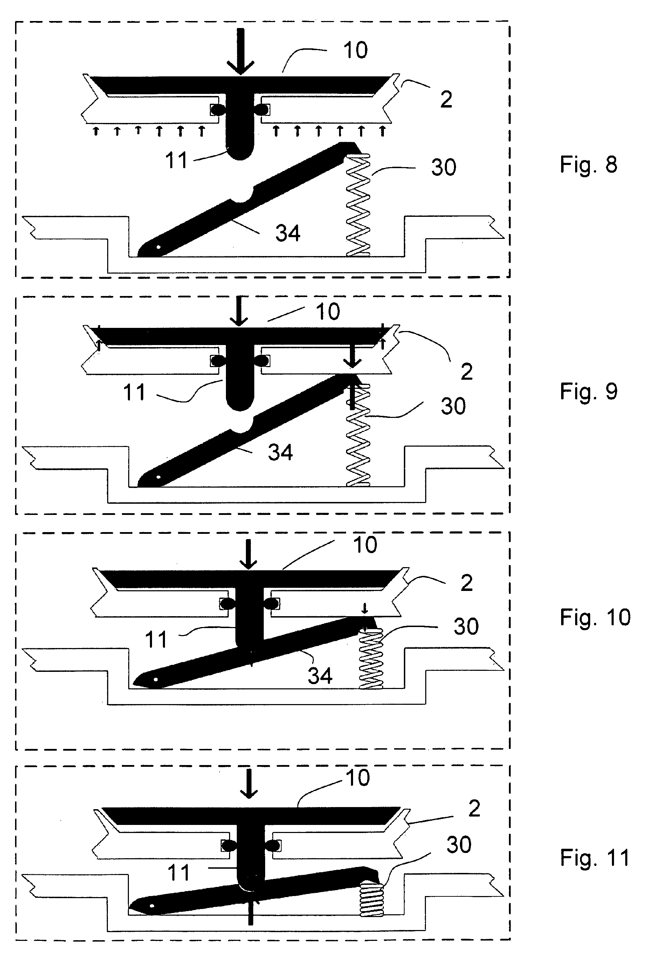

Figure 7 shows a further embodiment which corresponds to the first described embodiment of Figures 1 to 6 but in addition includes a threshold spring mechanism. This threshold spring mechanism comprises a spring 30 and a lever 34. Lever 34 is mounted at a hinge point 32. At a portion spaced apart from the hinge point 32 the lever 34 is resting on the spring 30. Due to this threshold spring mechanism the length compensating mechanism will not change to the unlocked state upon each depressurization of the chamber of the pneumatic cylinder 1. The reason for this is that the piston 2 will come to a rest position in which the spring 30 balances the bias force of the vehicle clutch urging the clutch back to its fully engaged position. At the beginning this equilibrium state will be reached without the pin 11 contacting the lever 34. This situation is shown schematically in more detail in Figures 8 to 11. In Figure 8 the piston is approaching the threshold spring mechanism. In Figure 9 the piston 2 came into contact with lever 34 and the spring 30 balances the remaining forces. At this stage the pin 11 has not yet reached the lever 34. Therefore, at this stage the length compensating mechanism will remain in the locked state when the piston 2 reaches its rest position. When the conditions of the clutch or other environmental conditions change further resulting in a further displacement of the push rod 8 in the fully engaged state of the vehicle clutch, the spring 30 of the threshold spring mechanism will be compressed further in order to balance the remaining forces in the equilibrium state, as shown in Figure 10. If the piston 2 is moved even further the pin 11 is contacting the lever 34 and lifting the locking body 10 off the frustoconical inner sidewalls of the hollow space in the piston 2, thereby causing the transition of the length compensating mechanism from the locked state to the unlocked state. In this manner a threshold is introduced that has the effect that the length compensating mechanism changes from the locked to the unlocked state is only once a predetermined change in the position of the push rod in the engaged position of the clutch has been reached.

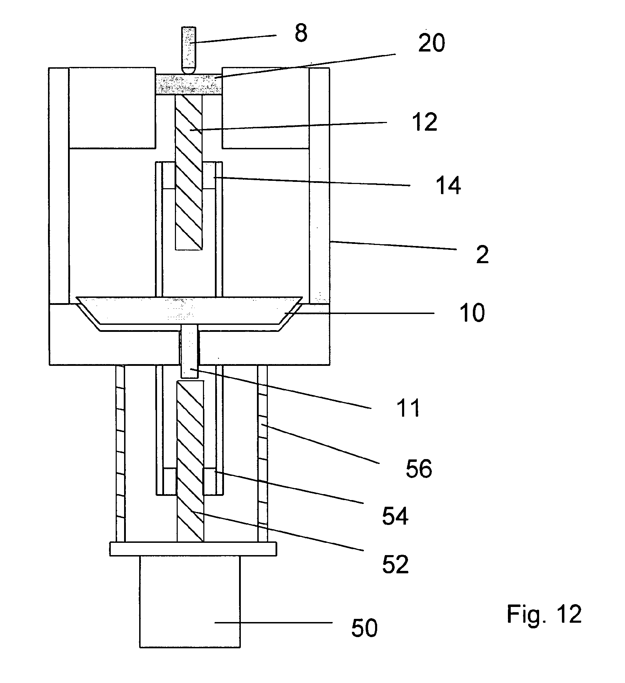

Fig. 12 is a schematic view of a clutch actuator according to the present invention having an alternative servo drive device. The piston 2 in this embodiment is not a piston of a pneumatic or hydraulic piston and cylinder arrangement, but a component which is mounted for linear movement (vertical movement in the presentation of Fig. 12). The further components of the lead screw and nut arrangement correspond in principle to those of the previously shown embodiments, in particular nut 14, lead screw 12, mounting body 20, and push rod 8. The first and second components of the compensating mechanism are also arranged in a corresponding manner, i.e. by a frustoconical locking body 10 as a male locking part received in a complementary shaped female locking part which is formed in the lower end portion of the piston 2. In this alternative embodiment the piston 2 is not driven by a pneumatic drive mechanism but by a rotary driver 50 as for example an electric motor. The output shaft of the rotary driver 50 is connected to a lead screw or warm gear 52 which cooperates with a nut 54 which is linked to the piston 2. By actuation of the rotary driver 50 lead screw 52 is rotated, and this rotation is transmitted to a linear movement of nut 54 which results in a corresponding linear movement of piston 2. The direction of the linear movement is controlled by properly controlling the sense of rotation of the rotary driver 50. Between rotary driver 50 and piston 2 compression springs 56 may be mounted which support piston 2 and which therefore reduce the amount of force needed to be generated by the rotary driver 50 in order to move piston 2.

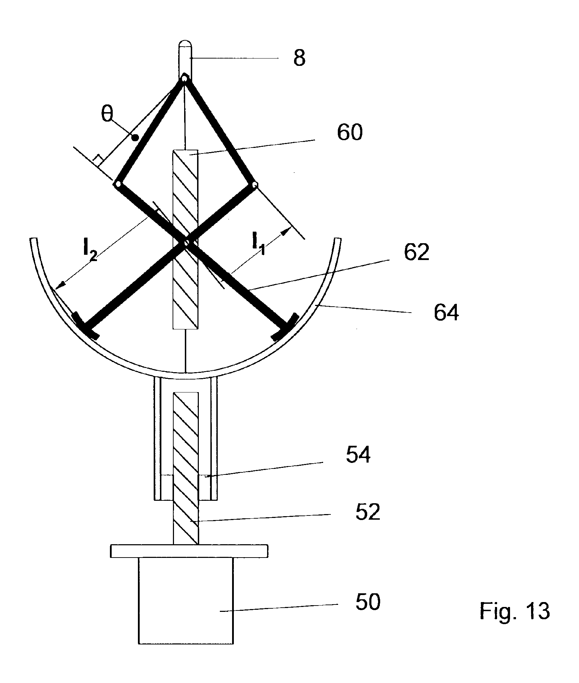

In Fig. 13 an alternative embodiment of a positive locking transmission of the compensating mechanism is shown. The servo drive device 50, 52 and 54 corresponds to the one as described in connection with Fig. 12 above. The positive locking transmission comprises a spherical locking surface 64 which is connected to nut 54 of the servo drive device. Locking surface 64 forms one of the first and second moveable components of the compensating mechanism. The other component is formed by lever arms 62 which form part of a scissors drive mechanism as shown. Between one hinge point of the scissors drive mechanism and the locking surface 64 a compression spring 60 is acting. This scissors drive mechanism converts a linear movement the upper hinge point of the scissors drive mechanism or of the push rod 8 to a pivoting movement of lever arms 62. The outer ends of the lever arms 62 form the second component of the positive locking transmission. The outer ends are moveable with respect to the locking surface 64 as the first component of the positive locking transmission, unless first and second component are fictional engagement. By properly selecting the length $l_1$ and $l_2$ of the lever elements end the angle θ the gear ratio of the transmission can be selected as desired. For this scissors drive mechanism one can easily calculate that the gear ratio *gr* is given by:

$$\tan(\Theta) \cdot \mu \cdot \frac{l_2}{l_1} = gr$$

wherein $\mu$ is the friction coefficient for the ends of the lever arms 62 on the locking surface 64, and $\Theta$ is the angle shown in Fig. 13. For this positive locking transmission a gear ratio lager than 1 means that a linear movement of the push rod 8 by a distance x corresponds to a tangential movement of the end portions of the lever arms 62 with respect to the locking surface 64 by a distance y, wherein y is larger than x.

**Claims**

1. Self-adjusting clutch actuator for operating a vehicle clutch of the type that is permanently biased to a fully engaged position, the clutch actuator comprising a servo drive device (1), a piston (2) slidably mounted for linear movement in an axial direction driven by the servo drive device, the piston being arranged to act on the vehicle clutch via a transfer member (8), the clutch actuator being arranged such that upon activation of the servo drive device (1) the piston (2) moves the transfer member (8) in the axial direction to move the vehicle clutch to its disengaged position, whereas upon deactivation of the servo drive the biased movement of the vehicle clutch back to its engaged position drives movement of the transfer member and thereby of the piston in the axial direction back to an end stop position thereof, wherein a compensating mechanism is disposed between piston (2) and transfer member (8), the compensating mechanism being capable of changing between an unlocked state in which it is able to adjust its length to follow the axial position of the transfer member (8) in the engaged state of the vehicle clutch, and a locked state in which it is locked to a fixed length, wherein the compensating mechanism comprises a positive locking transmission (12, 14) which converts any length adjusting movement into a corresponding relative movement of a first and a second component of the compensating mechanism and vice versa, wherein the compensating mechanism is arranged such that its locked state is effected by moving the first and second components into frictional engagement with each other to thereby prevent length adjusting movements of the compensating mechanism by preventing said relative movement of the first and second components, wherein the transmission has a gear ratio of larger than 1, wherein the servo drive device comprises a pneumatic or hydraulic cylinder (1), the piston (2) being slidably received therein to define a chamber which is selectively connectable to a pressure fluid source for activation of the servo drive device and which is selectively depressurizable for deactivation of the servo drive device, **characterized in that** the compensating mechanism is arranged to be responsive to the movement state of the piston (2) such that the change from the locked to the unlocked state occurs upon the piston (2) reaching the end stop position as a result of a depressurization of the chamber, and that it causes a change from the unlocked to the locked state upon leaving its end stop position as a result of the next pressurization of the chamber, wherein the length compensating mechanism comprises a spring mechanism (18) exerting a first force acting against the bias force of the clutch, which first and bias forces drive the compensating mechanism in the unlocked state to perform a length change if required to bring the first force and the bias force to an equilibrium.

2. Self-adjusting clutch actuator according to claim 1, **characterized in that** the positive locking transmission comprises a lead screw and nut arrangement (12, 14) to enable a length change of the compensating mechanism by relative rotation of the lead screw (12) and the nut (14), the lead screw and nut arrangement driving one of the first and second components of the compensating relative to the other.

3. Self-adjusting clutch actuator according to claim 2, **characterized in that** the piston (2) comprises a cylindrical piston body in which a hollow space is provided in the center which has diverging inner sidewalls to form a frustoconical space, wherein an extension of one of the components of the nut and lead screw extends into the hollow space and carries a locking body (10) of frustoconical shape which is mounted such that it can rotate around the rotational axis of the nut and lead screw arrangement (12, 14) and may be brought into frictionally engaging contact with the inner sidewalls of the frustoconical space of the piston body to effect the locked state of the compensating mechanism, and wherein a change from the locked to the unlocked state of the compensating mechanism is effected by a shift of said locking body (10) in its axial direction which causes a shift of the locking body from a first position in frictional contact with the sidewalls of the hollow space in the cylinder body to a second position without frictional contact with the sidewalls of the hollow space in the piston body, wherein piston body and locking body form said first and second components moveable relative to each other.

4.  Self-adjusting clutch actuator according to claim 3, **characterized in that** the frustoconical locking body (10) and the complementary frustoconical space are oriented such that the smaller diameter end portion of the frustoconical locking body is directed away from the lead srew and nut arrangement (12, 14) and the transfer member (8).

5.  Self-adjusting clutch actuator according to claim 3 or 4, **characterized in that** the frustoconical locking body (10) is provided with a pin (11) at its smaller diameter end face which extends through a through hole in the piston end wall facing the chamber of the pneumatic cylinder, the pin (11) being arranged to cooperate with an opposing end wall portion of the cylinder (1) such that upon coming into abutment against said end wall portion when the piston approaches its end stop position, the pin (11) urges the locking body (10) in the hollow space to be lifted off from its first to its second position to thereby bring the compensating mechanism to its unlocked state.

6.  Self-adjusting clutch actuator according to any of the claims 2 to 5, **characterized in that** the piston (2) is provided with a central tubular extension (4) in which the lead screw and nut arrangement (12, 14) is disposed, that the nut component (14) of the lead screw and nut arrangement is extending with one of its ends into the hollow space in the piston body and the lead screw is extending from an engagement portion with the nut to an end portion which is attached to a mounting body (20) received in the interior of the tubular extension (4), wherein the mounting body (20) is mounted in the tubular extension (4) such that it is locked against rotational movement but allows shifting movements along the axial direction of the of the tubular extension, and that the mounting body (20) is linked to the transfer member (8) to be able to exert force thereon in the axial direction.

7.  Self-adjusting clutch actuator according to any of the preceding claims, **characterized in that** the positive locking transmission is arranged to have a gear ratio of larger than 2, preferably larger than 3.

**Patentansprüche**

1.  Selbstnachstellender Kupplungsbetätiger zum Bedienen einer Fahrzeugkupplung von dem Typ, der permanent in eine vollständig eingerückte Stellung vorgespannt ist, wobei der Kupplungsbetätiger eine Servoantriebseinrichtung (1), einen Kolben (2), der gleitfähig zur linearen Bewegung in einer axialen Richtung angetrieben durch die Servoantriebseinrichtung gelagert ist, wobei der Kolben dazu eingerichtet ist, um über ein Übertragungsglied (8) auf die Fahrzeugkupplung zu wirken, wobei der Kupplungsbetätiger so eingerichtet ist, dass bei Aktivierung der Servoantriebseinrichtung (1) der Kolben (2) das Übertragungsglied (8) in der axialen Richtung bewegt, um die Fahrzeugkupplung in ihre ausgerückte Stellung zu bewegen, wohingegen bei Deaktivierung des Servoantriebs die vorgespannte Bewegung der Fahrzeugkupplung zurück in ihre eingerückte Stellung eine Bewegung des Übertragungsglieds antreibt und dadurch den Kolben in der axialen Richtung zurück in dessen Endanschlagstellung antreibt, wobei ein Kompensationsmechanismus zwischen dem Kolben (2) und dem Übertragungsglied (8) angeordnet ist, wobei der Kompensationsmechanismus dazu in der Lage ist, zwischen einem entriegelten Zustand, in dem der er dazu in der Lage ist, seine Länge nachzustellen, um der axialen Position des Übertragungsglieds (8) in dem eingerückten Zustand der Fahrzeugkupplung zu folgen, und einem verriegelten Zustand zu wechseln, in dem er mit einer festen Länge verriegelt ist, wobei der Kompensationsmechanismus ein formschlüssiges Getriebe (12, 14) aufweist, das jegliche Längennachstellbewegung in eine entsprechende relative Bewegung einer ersten und einer zweiten Komponente des Kompensationsmechanismus und umgekehrt umwandelt, wobei der Kompensationsmechanismus so eingerichtet ist, so dass sein verriegelter Zustand bewirkt wird, indem die erste und die zweite Komponente in Reibungseingriff miteinander gebracht sind, um dadurch Längennachstellbewegungen des Kompensationsmechanismus zu verhindern, indem die relative Bewegung zwischen der ersten und der zweiten Komponente verhindert wird, wobei das Getriebe ein Übersetzungsverhältnis von > 1 hat, wobei die Servoantriebseinrichtung einen pneumatischen oder hydraulischen Zylinder (1) aufweist, wobei der Kolben (2) gleitfähig darin aufgenommen ist, um eine Kammer zu definieren, die selektiv mit einer Druckfluidquelle verbindbar ist, um die Servoantriebseinrichtung zu aktivieren, und die selektiv druckentlastbar ist, um die Servoantriebseinrichtung zu deaktivieren, **dadurch gekennzeichnet, dass** der Kompensationsmechanismus dazu eingerichtet ist, auf den Bewegungszustand des Kolbens (2) zu reagieren, so dass der Wechsel von dem verriegelten in den unverriegelten Zustand erfolgt, wenn der Kolben (2) seine Endanschlagsstellung infolge einer Druckentlastung der Kammer erreicht, und dass ein Wechsel vom unverriegelten in den verriegelten Zustand bewirkt wird, wenn er seine Endanschlagstellung infolge der nächsten Druckbeaufschlagung der Kammer verlässt, wobei der Längenkompensationsmechanismus einen Federmechanismus (18) aufweist, der eine erste Kraft ausübt, die gegen die Vorspannkraft der Kupplung wirkt, wobei die erste Kraft und die Vorspannkraft den Kompensationsmechanismus im unverriegelten Zustand dazu antreiben, eine Längenänderung, wenn erforderlich, um die erste Kraft und die Vorspannkraft in ein Gleichgewicht zu bringen, auszuführen.

2. Selbstnachstellender Kupplungsbetätiger nach Anspruch 1, **dadurch gekennzeichnet, dass** das formschlüssige Getriebe eine Gewindespindel-Mutter-Anordnung (12, 14) aufweist, um eine Längenveränderung des Kompensationsmechanismus durch relative Drehung der Gewindespindel (12) und der Mutter (14) zu ermöglichen, wobei die Gewindespindel-Mutter-Anordnung eine der ersten und zweiten Komponenten des Kompensationsmechanismus relativ zueinander antreibt.

3. Selbstnachstellender Kupplungsbetätiger nach Anspruch 2, **dadurch gekennzeichnet, dass** der Kolben (2) einen zylindrischen Kolbenkörper aufweist, in dem in der Mitte ein Hohlraum vorhanden ist, der auseinanderlaufende innere Seitenwände hat, um einen kegelstumpfförmigen Raum zu bilden, wobei ein Fortsatz einer der Komponenten von der Mutter und der Gewindespindel in den Hohlraum reicht und einen Verschlusskörper (10) mit kegelstumpfförmiger Form trägt, der so gelagert ist, dass er sich um die Drehachse der Gewindespindel-Mutter-Anordnung (12, 14) drehen kann und dass er in reibschlüssigen Kontakt mit den inneren Seitenwänden des kegelstumpfförmigen Raums des Kolbenkörpers gebracht werden kann, um den verriegelten Zustand des Kompensationsmechanismus zu bewirken, und wobei ein Wechsel aus dem verriegelten in den unverriegelten Zustand des Kompensationsmechanismus bewirkt wird, indem eine Versetzung des Verschlusskörpers (10) in seiner axialen Richtung bewirkt wird, was eine Versetzung des Verschlusskörpers aus einer ersten Stellung in Reibungskontakt mit den Seitenwänden des Hohlraums in dem Zylinderkörper in eine zweite Stellung ohne Reibungskontakt mit den Seitenwänden des Hohlraums in dem Kolbenkörper bewirkt, wobei der Kolbenkörper und der Verschlusskörper die ersten und zweiten relativ zueinander beweglichen Komponenten bilden.

4. Selbstnachstellender Kupplungsbetätiger nach Anspruch 3, **dadurch gekennzeichnet, dass** der kegelstumpfförmige Verschlusskörper (10) und der komplementär kegelstumpfförmige Raum so orientiert sind, dass der Endbereich mit kleinerem Durchmesser des kegelstumpfförmigen Verschlusskörpers weg von der Gewindespindel-Mutter-Anordnung (12, 14) und dem Übertragungsglied (8) gerichtet ist.

5. Selbstnachstellender Kupplungsbetätiger nach Anspruch 3 oder 4, **dadurch gekennzeichnet, dass** der kegelstumpfförmige Verschlusskörper (10) an seiner Endfläche mit kleinerem Durchmesser mit einem Stift (11) versehen ist, der durch ein Loch in der Kolbenendwand, die der Kammer des pneumatischen Zylinders zugewandt ist, verläuft, wobei der Stift (11) dazu ausgestaltet ist, um mit einem gegenüberliegenden Endwandbereich des Zylinders (1) so zusammenzuwirken, dass der Stift, sobald er in Kontakt mit dem Endwandbereich kommt, wenn der Kolben sich seiner Endanschlagposition nähert, den Verschlusskörper (10) in den Hohlraum drückt und aus seiner ersten in seine zweite Stellung anhebt, um dadurch den Kompensationsmechanismus in den unverriegelten Zustand zu bringen.

6. Selbstnachstellender Kupplungsbetätiger nach einem der Ansprüche 2 bis 5, **dadurch gekennzeichnet, dass** der Kolben (2) mit einer zentralen, röhrenförmigen Verlängerung (4) versehen ist, in der die Gewindespindel-Mutter-Anordnung (12, 14) angeordnet ist, wobei die Mutterkomponente (14) der Gewindespindel-Mutter-Anordnung mit einer ihrer Enden in den Hohlraum in dem Kolbenkörper reicht und die Gewindespindel von einem Eingriffsbereich mit der Mutter zu einem Endbereich reicht, der mit einem Befestigungskörper (20) verbunden ist, der im Inneren der röhrenförmigen Verlängerung (4) aufgenommen ist, wobei der Befestigungskörper (20) in der röhrenförmigen Verlängerung (4) so angebracht ist, dass er gegen Drehbewegungen verriegelt ist, aber Verschiebungsbewegungen entlang der axialen Richtung der röhrenförmigen Verlängerung zulässt, und dass der Befestigungskörper (20) mit dem Übertragungsglied (8) verbunden ist, um in der Lage zu sein, darauf in axialer Richtung Kraft auszuüben.

7. Selbstnachstellender Kupplungsbetätiger nach einem der vorhergehenden Ansprüche, **dadurch ge-**

**kennzeichnet, dass** das formschlüssige Getriebe dazu eingerichtet ist, ein Übersetzungsverhältnis von > 2, vorzugsweise von > 3 zu haben.

## Revendications

1. Actionneur d'embrayage à auto-ajustement destiné à commander un embrayage de véhicule du type qui est sollicité en permanence vers une position totalement enclenchée, l'actionneur d'embrayage comprenant un dispositif d'entraînement asservi (1), un piston (2) monté à coulissement en vue d'un déplacement linéaire dans une direction axiale, entraîné par le dispositif d'entraînement asservi, le piston étant conçu pour agir sur l'embrayage de véhicule par l'intermédiaire d'un organe de transfert (8), l'actionneur d'embrayage étant conçu de telle sorte que, lors de l'activation du dispositif d'entraînement asservi (1), le piston (2) déplace l'organe de transfert (8) dans la direction axiale afin de déplacer l'embrayage de véhicule jusqu'à sa position désenclenchée, tandis que, lors de la désactivation du dispositif d'entraînement asservi, le déplacement par sollicitation de l'embrayage de véhicule le ramenant à sa position enclenchée entraîne le déplacement de l'organe de transfert et, par là même, du piston dans la direction axiale le ramenant à une position d'arrêt extrême de celui-ci, un mécanisme de compensation étant placé entre le piston (2) et l'organe de transfert (8), le mécanisme de compensation ayant la capacité d'adopter soit un état déverrouillé, dans lequel il peut ajuster sa longueur en fonction de la position axiale de l'organe de transfert (8) dans l'état enclenché de l'embrayage de véhicule, soit un état verrouillé, dans lequel il est verrouillé à une longueur fixée, le mécanisme de compensation comprenant une transmission de verrouillage par engagement géométrique (12, 14) qui convertit tout déplacement d'ajustement de longueur en déplacement relatif correspondant d'un premier et un second composant du mécanisme de compensation et vice versa, le mécanisme de compensation étant conçu de telle sorte que son état verrouillé soit établi en amenant les premier et second composants en contact de frottement l'un vis-à-vis de l'autre pour ainsi empêcher des déplacements d'ajustement de longueur du mécanisme de compensation en empêchant ledit déplacement relatif des premier et second composants, la transmission ayant un rapport de démultiplication supérieur à 1, le dispositif d'entraînement asservi comprenant un vérin pneumatique ou hydraulique (1), le piston (2) étant reçu à coulissement dans celui-ci afin de définir une chambre qui peut être raccordée, de manière sélective, à une source de fluide sous pression en vue de l'activation du dispositif d'entraînement asservi et qui peut être décomprimée, de manière sélective, en vue de la désactivation du dispositif d'entraînement asservi, **caractérisé en ce que** le mécanisme de compensation est conçu de façon à réagir en fonction de l'état de déplacement du piston (2) de telle sorte que le passage de l'état verrouillé à l'état déverrouillé ait lieu lorsque le piston (2) atteint la position d'arrêt extrême par suite d'une décompression de la chambre, et qu'il provoque le passage de l'état déverrouillé à l'état verrouillé lorsqu'il quitte sa position d'arrêt extrême par suite de la compression suivante de la chambre, le mécanisme de compensation de longueur comprenant un mécanisme formant ressort (18) exerçant une première force agissant à l'encontre de la force de sollicitation de l'embrayage, lesdites première force et force de sollicitation amenant le mécanisme de compensation à l'état déverrouillé afin d'effectuer une modification de longueur si nécessaire de façon à établir un équilibre entre la première force et la force de sollicitation.

2. Actionneur d'embrayage à auto-ajustement selon la revendication 1, **caractérisé en ce que** la transmission de verrouillage par engagement géométrique comprend un système à tige filetée et écrou (12, 14) pour permettre une modification de longueur du mécanisme de compensation par rotation relative de la tige filetée (12) et de l'écrou (14), le système à tige filetée et écrou entraînant l'un des premier et second composants du mécanisme de compensation par rapport à l'autre.

3. Actionneur d'embrayage à auto-ajustement selon la revendication 2, **caractérisé en ce que** le piston (2) comprend un corps de piston cylindrique au centre duquel est prévu un espace vide qui comporte des parois latérales intérieures divergentes de façon à former un espace tronconique, un prolongement de l'un des composants du système à tige filetée et écrou s'étendant dans l'espace vide et portant un corps de verrouillage (10) de forme tronconique qui est monté de telle sorte qu'il puisse tourner autour de l'axe de rotation du système à tige filetée et écrou (12, 14) et puisse être amené en contact d'engagement par frottement avec les parois latérales intérieures de l'espace tronconique du corps de piston afin d'établir l'état verrouillé du mécanisme de compensation, et un passage de l'état verrouillé à l'état déverrouillé du mécanisme de compensation étant réalisé par un changement de position dudit corps de verrouillage (10) dans sa direction axiale qui provoque un changement de position du corps de verrouillage d'une première position, en contact de frottement avec les parois latérales de l'espace vide dans le corps de piston, à une seconde position, sans contact de frottement avec les parois latérales de l'espace vide dans le corps de piston, le corps de piston et le corps de verrouillage constituant lesdits premier et second composants déplaçables l'un par rapport à l'autre.

4. Actionneur d'embrayage à auto-ajustement selon la revendication 3, **caractérisé en ce que** le corps de verrouillage tronconique (10) et l'espace tronconique complémentaire sont orientés de telle sorte que la partie d'extrémité de plus petit diamètre du corps de verrouillage tronconique pointe dans une direction s'éloignant du système à tige filetée et écrou (12, 14) et de l'organe de transfert (8).

5. Actionneur d'embrayage à auto-ajustement selon la revendication 3 ou 4, **caractérisé en ce que** le corps de verrouillage tronconique (10) est muni d'une goupille (11) au niveau de sa face d'extrémité de plus petit diamètre qui s'étend à travers un trou traversant dans la paroi d'extrémité du piston se trouvant face à la chambre du vérin pneumatique, la goupille (11) étant conçue pour coopérer avec une partie de paroi d'extrémité opposée du vérin (1) de telle sorte que, lorsqu'elle vient buter contre ladite partie de paroi d'extrémité lorsque le piston s'approche de sa position d'arrêt extrême, la goupille (11) pousse le corps de verrouillage (10) dans l'espace vide de manière à le soulever de sa première position à sa seconde position pour ainsi amener le mécanisme de compensation à l'état déverrouillé.

6. Actionneur d'embrayage à auto-ajustement selon l'une quelconque des revendications 2 à 5, **caractérisé en ce que** le piston (2) est muni d'un prolongement tubulaire central (4) dans lequel est disposé le système à tige filetée et écrou (12, 14), **en ce que** le composant écrou (14) du système à tige filetée et écrou s'étend par une de ses extrémités dans l'espace vide du corps de piston et la tige filetée s'étend d'une partie d'engagement avec l'écrou à une partie d'extrémité qui est attachée à un corps de support (20) reçu à l'intérieur du prolongement tubulaire (4), le corps de support (20) étant monté dans le prolongement tubulaire (4) de telle sorte qu'il soit verrouillé contre un mouvement de rotation mais permette des mouvements de changement de position le long de la direction axiale du prolongement tubulaire, et **en ce que** le corps de support (20) est lié à l'organe de transfert (8) de manière à pouvoir exercer une force sur celui-ci dans la direction axiale.

7. Actionneur d'embrayage à auto-ajustement selon l'une quelconque des revendications précédentes, **caractérisé en ce que** la transmission de verrouillage par engagement géométrique est conçue de façon à avoir un rapport de démultiplication supérieur à 2, de préférence supérieur à 3.

Fig. 1

Fig. 2

Fig. 3

Fig. 4

EP 2 683 960 B1

Fig. 5

Fig. 6

EP 2 683 960 B1

Fig. 7

Fig. 8

Fig. 9

Fig. 10

Fig. 11

Fig. 12

EP 2 683 960 B1

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5390497 A
- US 5984072 A
- EP 1531278 A1
- US 5423401 A